# EUROPEAN PATENT APPLICATION

(11) **EP 4 643 813 A1**
(43) Date of publication of application: **05.11.2025**
(21) Application number: 24382490.1
(22) Date of filing: 03.05.2024
(51) Int. Cl.: A61C 8/00

(54) **IMPLANTS, TEMPORARY ANCHORAGE DEVICES AND METHODS OF TREATMENT**

(71) Applicant: Orthodontic Research and Development, S.L., 08022 Barcelona (ES)
(72) Inventor: CARRIERE LLUCH, Luis, 08017 BARCELONA (ES)
(74) Representative: Bardehle Pagenberg S.L.

(57) **Abstract**

The present disclosure relates to an implant configured as a temporary anchorage device, TAD, comprising a fixture for fixing the implant in a bone of a subject and an abutment mounted on the fixture. The abutment is configured to be moved in use from a default position to an active position, wherein the abutment is biased to return to the default position and the abutment is configured to retain a traction element.

## Description

The present disclosure relates to implants for use in orthodontic treatments and more particularly relates to temporary anchorage devices (TADs). The present disclosure further relates to methods of mounting such implants and to treatments using such devices.

### BACKGROUND ART

Depending on a patient's malocclusion, a variety of orthodontic treatments is available. In some of these treatments, extraction of teeth may be required in order to create space for the remaining teeth. Other well-known methods of treatment involve the use of orthodontic brackets and/or of (transparent) shells to be fitted around a segment of teeth or a complete arc of teeth, i.e. so-called "aligners". A segment of teeth is herein defined as a group of neighbouring teeth, i.e. two or more neighbouring teeth.

In some treatments, a distalizing element may be used, possibly in combination with the extraction of one or more teeth. In some cases, after extraction of a tooth, a dental implant (dental prosthesis) may be used to replace an extracted tooth. In treatments wherein specific forces are to be applied to a tooth or a segment of teeth, different anchoring devices may be used for applying a pulling or pushing force.

A particular distalizing element is known from e.g. EP 1 433 435 and EP 1 649 824. These distalizers are especially adapted for the segmental distalization of the canine-to-molar posterior maxillary area. The distalizers of these documents comprise a mesial element which may be fixed by its base to an upper canine, and further comprises a distal element which may be fixed by its base to an upper molar, in particular the first molar.

The mesial element in these designs comprises both a base, and an arm that connects it to the distal element. The arm may be substantially arch shaped and may comprise a ball member at one of its ends. This ball member is received in a receptacle of the distal element that has a complementary shape to the ball member.

The mesial element may comprise a blunt projection that extends substantially forwards which may serve as a hooking element. In use, a bracket with a hook may be attached to a mandibular molar and an (orthodontic) rubber band may be suspended around this hook and the hooking element on the mesial element. This way, a force pulling the maxillary canine backwards is provided. If the patient is wearing e.g. a splint (or another fixation device) that acts as a solid anchor and fixes the teeth of the mandible in position, it may be ensured that the teeth in the mandible do not move forwards, and that the maxillary canine is pulled backwards.

Further distalization devices are known from e.g. US2011/0244414 and WO 2018/219858. Treatments involving such distalization devices may rely on the use of an anchor attached to a molar, e.g. a hook on a bracket or tube on a molar. However, other anchoring devices may also be used. E.g. temporary anchorage devices (TADs) having a small hook or button.

Temporary Anchorage Devices (TADS) are generally small, screw-like dental implants typically made of a titanium alloy. Usually, the implants are temporary and they remain in place during some months of treatment, and then they are removed. Their function is to provide a stable anchorage in a patient's bone.

Such TADs may be used in different treatments, including treatments that have an objective to move specific teeth or treatment devices, and also including treatments wherein the TAD is used to stabilize a specific situation and avoid undesired movements.

For example, in some treatments, rubber bands may be stretched between a TAD and another e.g. an orthodontic bracket. Instead of rubber bands, springs, orthodontic power chains or also ligatures made of e.g. nitinol or stainless steel.

The elements that may be used in combination with the TADs will herein generally be denoted as "traction elements", since they apply traction (a pulling force) on the TAD (and to the bracket, tooth or other orthodontic device to which they are attached). Examples of such traction elements include orthodontic power chains, rubber bands, and elastic or superelastic ligatures.

Silicone rubber is used in many medical applications, and is thus biocompatible. Moreover, silicone rubber has good elastic properties. Silicone rubber however has a number of disadvantages as well. An orthodontic power chain or an elastic band loses its activity or effectivity rather quickly, e.g. within a few hours, under the influence of constant stress, saliva and humidity.

The effectiveness of the rubber bands, and other traction elements may wear off over time. Thereby the force that is or can be applied by the combination of the TAD and traction element can also reduce over time. If the objective of the treatment is to move a tooth or certain teeth, it may take more time to reach a specific level of movement.

The only available solution to this problem is the substitution of the orthodontic element e.g. the traction element. In the case of e.g. rubber bands or orthodontic power chains, it means the very frequent substitution of such elements in order to maintain sufficient traction.

Substituting an orthodontic element in this case usually implies a visit to an orthodontist since patients cannot attach and detach the traction elements themselves. TADs generally are very small and the features that retain e.g. elastic bands are generally very closely arranged to the soft gingival tissue. TADs and the traction elements used with them are generally designed for manipulation by an orthodontist not by a patient.

The present disclosure provides improvements in relation with such temporary anchorage devices.

### SUMMARY

According to a first aspect, an implant configured as a temporary anchorage device, TAD, is provided. The TAD comprises a fixture for fixing the implant in a bone of a subject and an abutment arranged on the fixture. The abutment is configured to retain an orthodontic element. The abutment is further configured to be moved in use from a default position to an active position, wherein the abutment is biased to return to the default position.

In accordance with this aspect, a TAD is provided which can facilitate more effective treatments. Regardless of whether the TAD is used with a silicone rubber band, or other orthodontic traction element, the TAD according to this aspect inherently enhances the force applied to the traction element and to the device or tooth to which the traction element is attached. The TAD according to this aspect becomes, in a way, a traction element.

The abutment is biased to return to its original shape or state and thereby maintains a force level if e.g. the force from the rubber band or orthodontic power chain (or other traction element). The abutment, if appropriately designed, can become inactive as the treatment progresses and reaches its objective. I.e. in the case of a treatment wherein the TAD is used to pull a tooth, segment of teeth, or an orthodontic device, the abutment may approach its default position as the desired movement is achieved. Once the abutment reaches the default position, it will no longer actively apply a force. The abutment according to this aspect may thus be regarded as safe in treatments.

A "default" position as used throughout the present disclosure may refer to an "as delivered" form of the abutment. I.e. before manipulation by the orthodontist, the shape of the TAD will be in its default or neutral position.

An "active position" or "activated position" as used throughout the present disclosure may refer to the abutment after mounting in a mouth of a patient, and/or after attaching an orthodontic traction element.

In some examples, the abutment may be configured to transition from the default position to the active position by deforming at least part of the implant. In order to active the implant, a part of the implant may be deformed.

In examples, at least part of the abutment of substantially the whole abutment may be deformed. In other examples, the coupling or connecting between the abutment and the fixture may be deformed.

In examples, the abutment may comprise a resilient material which undergoes elastic deformation. Resilient materials may herein be regarded as materials that can endure stress, recover their shape or form after deformation, and maintain their integrity. Examples of such materials include elastomeric, silicone or rubber materials. Further examples include superelastic or shape memory materials.

A superelastic material may herein be regarded as a material that exhibits the superelastic or "pseudoelastic" effect. The pseudoelastic effect is an elastic (reversible) response to an applied stress, caused by a phase transformation between the austenitic and martensitic phases of a crystal. Examples of materials that disclose this type of behavior include Nitinol (nickel titanium alloys), Copper-Zinc-Aluminum, and e.g. Copper-Aluminum-Nickel.

A "shape memory" material may herein be regarded as a material that has the ability to remember and recover their original shape after undergoing deformation. This unique property is due to a reversible phase transformation that can be induced by changes in temperature, stress, or other external stimuli. The most common type of shape memory materials are shape memory alloys (SMAs), such as nickel-titanium (Nitinol). These materials exhibit two distinct crystal structures at different temperatures: martensite at lower temperatures and austenite at higher temperatures. When the SMA is deformed in its martensitic state and then heated above a certain temperature (the transformation temperature), it undergoes a reversible phase change back to its original austenitic structure, thereby recovering its original shape.

Such an effect may be used for deformation of the implant. I.e. upon implantation, the implant may be cooled, e.g. liquid nitrogen might be sprayed on the implant. The nitrogen may hit the implant as an aerosol or vaporized liquid and cool the implant. When cold, the implant (or abutment) can be easily deformed. Upon reheating and reaching body temperature, the implant (or abutment) becomes stiffer and will have a tendency to revert back to its shape prior to deformation.

This effect may also advantageously be used during a treatment. As a patient may ingest cold and warmer food and drinks, the abutment (or other portion of the implant) may be temporarily deactivated and reactivated. The intermittent application of force has been found to be beneficial in orthodontic treatments.

Shape memory polymers (SMPs) are another type of shape memory material, which can return to a predetermined shape when subjected to an external stimulus like heat, light, or a magnetic field.

In some examples, the deformable or reslilient material may be Nitinol. Nitinol is a unique type of alloy known for its shape memory and superelastic properties. It is primarily composed of nickel (Ni) and titanium (Ti) in roughly equal atomic percentages, which gives it the name "NiTi" or Nitinol. It is biocompatible and the most remarkable characteristic of Nitinol is its ability to recover its original shape after deformation when subjected to heat (shape memory effect) or mechanical stress (superelasticity).

The abutment may be arranged on the fixture in a variety of ways. E.g., the abutment may be screw mounted to the fixture, the abutment may be integrally formed with the fixture, the abutment may be welded or bonded to the fixture. In yet further examples, the abutment has a male connector to be received in a female connector of the fixture or the abutment has a female connector to be mounted over a male connector of the fixture.

In some examples, the abutment may be configured to transition from the default position to the active position by deformation of a connection between the abutment and the fixture. E.g the abutment may be spring mounted, or a connection between the abutment and the fixture may be elastomeric.

The connection or coupling element between abutment and fixture may be connected to both fixture and abutment in a variety of ways, e.g. welding, bonding, screw mounted, male-female coupling etc.

In examples, the abutment may comprise a head or hook, eyelet, or button for retaining the orthodontic component. In some examples, the abutment may include a plurality of retention features e.g. a plurality of holes or eyelets to retain the traction element in a plurality of different positions.

In examples, the traction element used in combination with the abutment may be a ligature, a spring or an elastic band.

In examples, the fixture may comprise a bone screw. In other examples, the fixture may be non-threaded.

In a further aspect of the present disclosure, a method for mounting an implant in a mouth of a subject is provided. The method comprises securing a fixture of an implant in a bone of the subject, attaching a traction element to an abutment of the implant, and deforming at least a portion of the implant to transition the abutment of the implant from a default position to an active position. The abutment is biased to return to the default position when in the active position.

In examples, the deforming of the portion of the implant occurs when the traction element is attached to the abutment. I.e. the force applied by the traction element may activate the implant. In other examples, the deforming occurs prior to attachment of the traction element.

In some examples, the abutment comprises an arm, wherein the arm is configured for retaining the orthodontic element at or near a distal end of the arm. The arm may be configured to rotate about a pivot point when moved to the activated state. Rotation of the arm may be substantially about a longitudinal axis of the fixture. In other examples, rotation of the arm may be substantially about an axis perpendicular to a longitudinal axis of the fixture.

Various aspects may be combined with each other. Examples of various of the different aspect may be combined with each other.

Additional objects, advantages and features of embodiments of the invention will become apparent to those skilled in the art upon examination of the description or may be learned by practice of the invention.

### BRIEF DESCRIPTION OF THE DRAWINGS

Particular embodiments of the present invention will be described in the following by way of non-limiting examples, with reference to the appended drawings, in which:
Figures 1A - 1B illustrates some of the terminology used herein;
Figures 2A - 2B illustrate potential uses of a temporary anchorage device; and
Figures 3A - 3D schematically illustrate examples of temporary anchorage devices in accordance with the present disclosure.

### DETAILED DESCRIPTION OF EMBODIMENTS

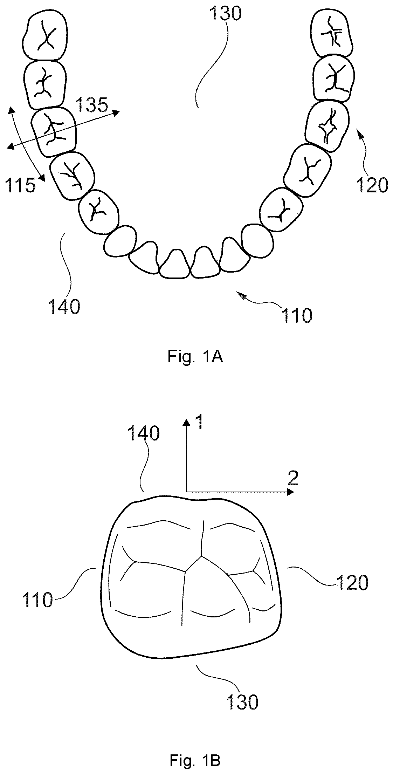

Figure 1A schematically illustrates the arrangement of teeth in the lower jaw (mandible). A front portion of the mouth 110 may be referred to as a mesial region. A rear portion of the mouth 120 may be referred to as a distal region. An inner portion of the mouth behind the teeth 130 may be referred to as a lingual region. An outer portion of the mouth 140 may be referred to as a labial region. A mesial-distal direction 115 with respect to a specific tooth (first molar) has been schematically indicated in figure 1A. Also indicated in figure 1A is a lingual-labial direction 135 with respect to the same tooth. This terminology will be adhered to in the present disclosure.

Figure 1B schematically illustrates a molar. A mesial side of the molar is indicated by reference sign 110, whereas a distal side of the molar is indicated with reference sign 120. Reference signs 130 and 140 respectively indicate the lingual and labial sides of the molar.

In the present disclosure, a first axis is defined as an axis substantially perpendicular to a base surface of a distal element attached to a lingual surface of the molar. In figure 1B, the first axis is indicated with reference sign 1. A second axis may be defined as extending along the mesial-distal direction substantially parallel to the base surface of the distal element. The second axis 2 is perpendicular to the first axis 1.

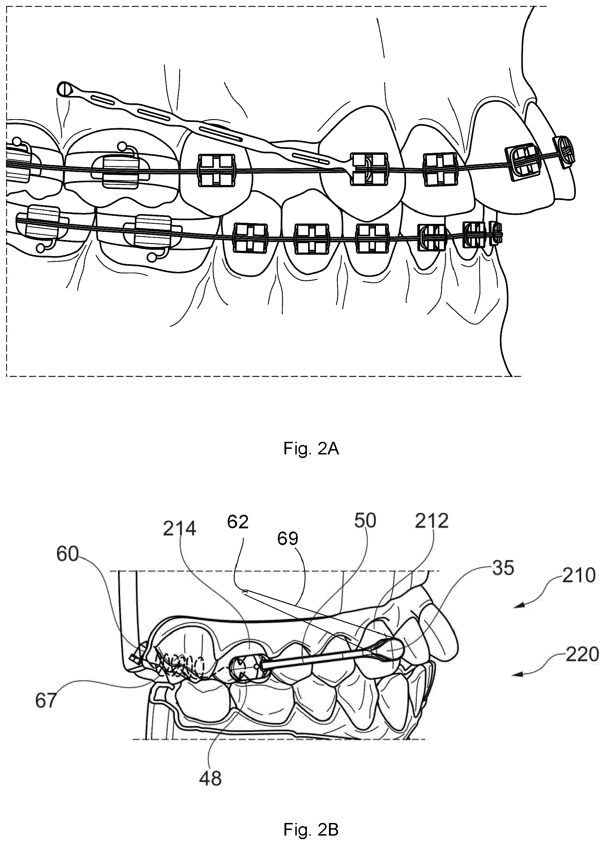

Figure 2A schematically illustrates one potential implementation of a TAD. In this particular example, the TAD is mounted to bone tissue in the maxilla. An elastomeric orthodontic power chain is stretched between the TAD and a bracket on a patient's tooth. The orthodontic power chain is retained behind the head of the TAD.

Figure 2B schematically illustrates another potential implementation of a TAD in an orthodontic treatment. In this particular case, the malocclusion may be a class II malocclusion. Class II malocclusions are generally characterized by upper molars that are too far forward compared to the lower molars. A Class II malccolusion may also be known as an "overbite". Contrary to class II, class III malocclusions are characterized generally by lower molars that are too far forward compared to the upper molars. This may also be known as "underbite".

A method for treating a malocclusion in a patient may comprise providing the orthodontic device 50. The mesial base surface 31 of the orthodontic device 50 may be attached to a premolar or, in this example to a canine 212 of the patient.

The distal base surface 42 of the orthodontic device 50 may be attached to a molar 214 of the patient. The method further comprises providing a first distalization force element and coupling the first distalization force element to the distal anchoring structure 48 and activating the first distalization force element.

In this example, the first distalization force element may be an elastic band, a (Nitinol) ligature, a coil spring or other intramaxillary device, which may be attached to a TAD 60 and anchoring structure 48 of the distal element 40 of orthodontic device 50.

The first distalization force element may, at a first end, extend through the orifice 48 of the distal element 40 of the orthodontic device 50 and at the other end be attached to the TAD. The first distalization force element may in some examples be stretched during mounting such that it has the tendency to pull the TAD and orthodontic device 50 closer together. A result may be a pulling force in a distal direction on the distal element 40. Since the distal element 40 is connected to the mesial element, the whole segment of teeth extending from molar 214 to canine 212 may be pulled in a distal direction in order to correct the class II malocclusion.

In the example of figure 2B, the first distalization force element is a ligature 63. In addition, a further traction device, and particularly an elastic band may be arranged around projection 35 on the mesial element and around a hook on a further TAD.

In the illustrated example, the orthodontic device 50 is arranged in a maxilla 210 of the patient. The orthodontic device 50 may be used for moving a segment of teeth in the maxilla, e.g. to correct an overbite. The anchor or TAD for the further traction device (e.g. elastic band) in this case may be mounted in the maxilla 210, but in other cases may be arranged in the mandible 220.

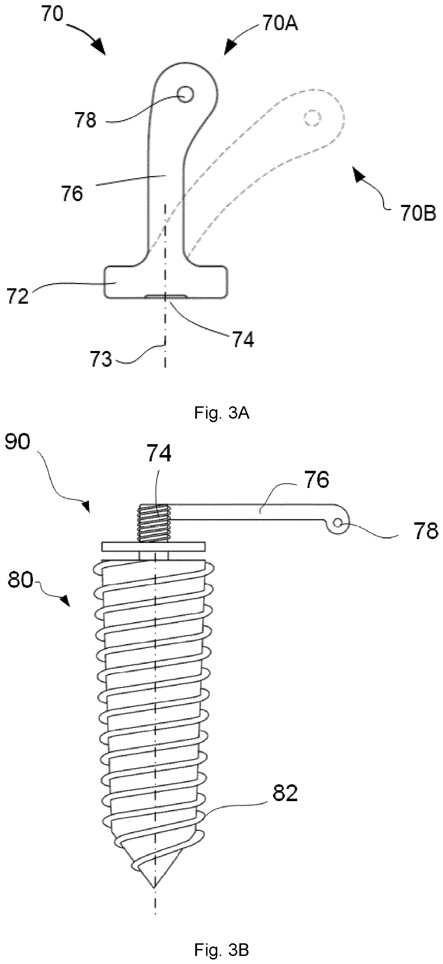

Figure 3A illustrates an example of an example of an abutment 70 for use in an implant according to an example of the present disclosure. The implant is configured as a temporary anchorage device, TAD, and comprises a fixture for fixing the implant in a bone of a subject (not illustrated in figure 3A).

The implant further comprises an abutment 70 configured for retaining a traction element, and the abutment is arranged on the fixture. As schematically illustrated with interrupted lines, the abutment is configured to transition in use from a default position 70A (with continuous lines) to an active position 70B (with interrupted lines), wherein the abutment is biased to return to the default position.

The abutment 70 of this example has a base 72, through which it may be mounted on the fixture. E.g. an internal screw thread 74 may be provided to mount the abutment 70 on the fixture.

The abutment 70 of this example comprises an arm 76 which has a retention feature 78 (in this case a hole) to retain an orthodontic traction element, e.g. a ligature. The retention feature maybe arranged at or near a distal end of the arm. In this particular case, the abutment is configured to transition from the default position to the active position by deforming substantially the whole abutment.

In this particular example, the abutment may be made of a shape memory material or superelastic material, in particular Nitinol.

E.g. a ligature may be inserted through and attached at hole 78. By stretching or tightening the ligature, the arm is configured to rotate about a pivot point when moved to the activated state. A longitudinal axis 73 of the implant is schematically illustrated in figure 3A. In this example, rotation of the arm is substantially about an axis perpendicular to a longitudinal axis of the fixture (perpendicular to the image in this case).

In some examples, prior to deforming, the temperature of the abutment may be lowered, e.g. by spraying liquid nitrogen. The abutment may then easily be deformed. The abutment will be activated in two different ways. Firstly, the abutment will have a tendency to return to its default position. Secondly, through the increase of temperature to body temperature, the shape memory of nitinol may be activated. The abutment is thus in an activated, "stiffer", state with a stronger tendency to return to the original state.

In the example of figure 3A, the force applied by a traction element on the TAD and on a tooth (or an orthodontic device) can be mainly in the sagittal or anterio-posterior plane.

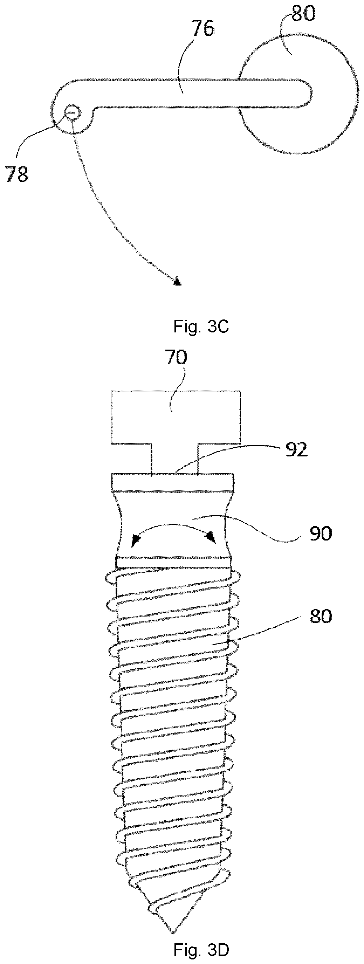

Figures 3B and 3C illustrate another example of an implant and abutment, which is moved from a default position to an active position. The abutment is mounted on top of bone screw 80. Bone screw 80 may comprise a self-tapping thread. An orthodontist may screw the implant into a bone of a patient.

Also in this example, the abutment comprises an arm 76 with a suitable retention feature 78 at or near a distal end of the arm. In this case, the rotation of the arm upon activation may be around a longitudinal axis of the implant as illustrated in figure 3C. The force applied in this example may be in plane perpendicular to the fixture (bone screw 80). The force may be applied particular in the occlusal-gingival plane.

The abutments of the examples of figures 3A - 3C may be screw mounted to the fixture. In further examples, such abutments may be integrally formed with the fixture. In yet further examples, the abutment may be welded or bonded to the fixture. In yet other examples, the abutment may have a male connector to be received in a female connector of the fixture or the abutment may have a female connector to be mounted over a male connector of the fixture.

Figure 3D illustrates a further example of an implant according to the present disclosure. In the example of figure 3D, the implant has a bone screw 80 whish is similar to the bone screw of the example of figure 3B. In this particular, the abutment 70 is configured to transition from the default position to the active position by deformation of a connection 90 between the abutment 70 and the fixture 80.

In this example, the connection 90 between the abutment and fixture may be made of an elastomeric material. E.g. the connection 90 may be an elastomeric bushing.

The abutment can be moved away from its default position through elastic deformation of the connection 90. After activation, the connection 90 will be biased to return to its default state or position, and so will abutment 70. In other examples, one or more springs may be used for connecting the abutment 70 to fixture 80.

In this particular example, the abutment 70 may be screw mounted on the connection 90. The connection may comprise a metallic portion comprising a screw thread. It should be clear that other connections or has a male-female coupling with the connection, or welding or bonding to the connection are also possible.

In the examples of figures 3A - 3C, the abutment comprises a hole for retaining a traction element. In the example of figure 3D, the traction element may be retained by a head (widening of the abutment). In further examples, a hook, eyelet, or button or other feature for retaining the traction element may be used.

An abutment may further be provided comprising a plurality of retention features (e.g. a plurality of holes or eyelets) to retain the traction element in a plurality of different positions. Depending on the position chosen, the force vector may vary. In some examples, depending on the position chosen, the degree of deformation of the abutment may also be varied.

In any of the examples disclosed herein, the traction element may be a stainless steel ligature, a nitinol ligature, a spring (e.g. a coil spring), an elastic band, an orthodontic power chain (e.g. a silicon or elastomer orthodontic power chain, or a nitinol power chain).

In any of the examples disclosed herein, an implant may be delivered in an assembled state, e.g. the abutment is mounted on the fixture, or the abutment is mounted on an elastomeric connection, which in turn is mounted on the fixture. As already mentioned, an abutment may also be integrally formed with the fixture. In yet further examples, the implant may be delivered as a kit of parts e.g., the abutment may be mounted on top of the fixture by an orthodontist or other professional.

Even though in the examples shown, the fixture may be or comprise a bone screw, it should be clear that any other suitable fixture may be used.

For reasons of completeness, aspects of the present disclosure are set out in the following numbered clauses.
Clause 1. An implant configured as a temporary anchorage device, TAD, comprising:
   a fixture for fixing the implant in a bone of a subject; and
   an abutment configured for retaining a traction element, wherein the abutment is arranged on the fixture, and wherein
   the abutment is configured to transition in use from a default position to an active position, wherein the abutment is biased to return to the default position.
Clause 2. The implant of clause 1, wherein the abutment is configured to transition from the default position to the active position by deforming at least part of the implant.
Clause 3. The implant of clause 2, wherein the abutment is configured to transition from the default position to the active position by deforming at least part of the abutment.
Clause 4. The implant of clause 3, wherein the abutment is configured to transition from the default position to the active position by deforming substantially the whole abutment.
Clause 5. The implant of clause 3 or 4, wherein the abutment comprises a resilient material which undergoes elastic deformation.
Clause 6. The implant of clause 5, wherein the resilient material is a shape memory material or superelastic material.
Clause 7. The implant of clause 6, wherein the resilient material is Nitinol.
Clause 8. The implant of any of clauses 1 - 7, wherein the abutment comprises an arm, wherein the arm is configured for retaining the orthodontic element at or near a distal end of the arm.
Clause 9. The implant of clause 8, wherein the arm is configured to rotate or deform about a pivot point when moved to the activated state.
Clause 10. The implant of clause 9, wherein rotation or deformation of the arm is substantially about a longitudinal axis of the fixture.
Clause 11. The implant of clause 9, wherein rotation or deformation of the arm is substantially about an axis perpendicular to a longitudinal axis of the fixture.
Clause 12. The implant of any of clauses 1 - 11, wherein the abutment is screw mounted to the fixture.
Clause 13. The implant of any of clauses 1 - 11, wherein the abutment is integrally formed with the fixture.
Clause 14. The implant of any of clauses 1 - 11, wherein the abutment is welded or bonded to the fixture.
Clause 15. The implant of any of clauses 1 - 11, wherein the abutment has a male connector to be received in a female connector of the fixture.
Clause 16. The implant of any of clauses 1 -11, wherein the abutment has a female connector to be mounted over a male connector of the fixture.
Clause 17. The implant of clause 1 or 2, wherein the abutment is configured to transition from the default position to the active position by deformation of a connection between the abutment and the fixture.
Clause 18. The implant of clause 17, wherein the abutment is spring mounted with respect to the fixture.
Clause 19. The implant of clause 17, wherein the connection between the abutment and fixture is made of an elastomeric material.
Clause 20. The implant of clause 19, wherein the abutment is screw mounted on the connection, or has a male-female coupling with the connection, or is welded or bonded to the connection.
Clause 21. The implant of any of clauses 1 - 20, comprising a head or hook, eyelet, or button for retaining the traction element.
Clause 22. The implant of any of clauses 1 - 21, comprising a plurality of retention features to retain the traction element in a plurality of different positions.
Clause 23. The implant of any of clauses 1 - 22, wherein the traction element is a ligature, a spring, orthodontic power chain, or an elastic band.
Clause 24. The implant of any of clauses 1 - 23, wherein the fixture comprises a bone screw.
Clause 25. The implant of any of clauses 1 - 23, wherein the fixture is non-threaded.
Clause 26. A method for mounting an implant in a mouth of a subject, comprising:
   securing a fixture of an implant in a bone of the subject;
   attaching a traction element to an abutment of the implant; and
   deforming at least a portion of the implant to transition the abutment of the implant from a default position to an active position, wherein
   the abutment is biased to return to the default position when in the active position.
Clause 27. The method of clause 26, wherein the deforming of the portion of the implant occurs when the traction element is attached to the abutment.
Clause 28. The method of clause 26 or 27, wherein the portion of the implant that is deformed comprises a shape memory material and the method comprises cooling at least part of the implant prior to deforming the deforming the portion of the implant.
Clause 29. The method of clause 28, wherein the cooling of at least part of the implant comprises spraying liquid nitrogen on the implant.
Clause 30. The method of clause 28 or 29, wherein the cooling occurs prior to securing the fixture of the implant in the bone of the subject.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. An implant configured as a temporary anchorage device, TAD, comprising:
a fixture for fixing the implant in a bone of a subject; and
an abutment configured for retaining a traction element, wherein the abutment is arranged on the fixture, and wherein
the abutment is configured to transition in use from a default position to an active position, wherein the abutment is biased to return to the default position.

2. The implant of claim 1, wherein the abutment is configured to transition from the default position to the active position by deforming at least part of the abutment.

3. The implant of claim 2, wherein the abutment is configured to transition from the default position to the active position by deforming substantially the whole abutment.

4. The implant of claim 2 or 3, wherein the abutment comprises a resilient material which undergoes elastic deformation.

5. The implant of claim 4, wherein the resilient material is a shape memory material or superelastic material.

6. The implant of claim 5, wherein the resilient material is Nitinol.

7. The implant of any of claims 1-6, wherein the abutment comprises an arm, wherein the arm is configured for retaining the traction element at or near a distal end of the arm.

8. The implant of claim 7, wherein the arm is configured to rotate about a pivot point when moved to the active position, and wherein rotation of the arm is substantially about a longitudinal axis of the fixture or rotation of the arm is substantially about an axis perpendicular to a longitudinal axis of the fixture.

9. The implant of any of claims 1-8, wherein the abutment is screw mounted to the fixture, integrally formed with the fixture, welded or bonded to the fixture.

10. The implant of any of claims 1-8, wherein the abutment has a male connector to be received in a female connector of the fixture or the abutment has a female connector to be mounted over a male connector of the fixture.

11. The implant of claim 1, wherein the abutment is configured to transition from the default position to the active position by deformation of a connection between the abutment and the fixture.

12. The implant of claim 11, wherein the connection between the abutment and fixture is made of an elastomeric material.

13. The implant of claim 12, wherein the abutment is screw mounted on the connection, or has a male-female coupling with the connection, or is welded or bonded to the connection.

14. The implant of any of claims 1 -13, comprising a head or hook, eyelet, or button for retaining the traction element.

15. The implant of any of claims 1 - 14, comprising a plurality of retention features to retain the traction element in a plurality of different positions.
